# FASCICULE DE BREVET EUROPEEN

(11) **EP 2 896 268 B1**
(45) Date de publication et mention de la délivrance du brevet: **18.08.2021**
(21) Numéro de dépôt: 13767037.8
(22) Date de dépôt: 04.09.2013
(51) Int. Cl.: H04L 12/64, H04W 52/02, H04W 74/00, H04W 88/04, H04W 88/16

(54) **GESTION DE L'UTILISATION D'UNE PASSERELLE PAR UNE PLURALITÉ DE TERMINAUX**
VERWALTUNG DER VERWENDUNG EINES GATEWAYS DURCH EINE VIELZAHL VON ENDGERÄTEN
MANAGEMENT OF THE USE OF A GATEWAY BY A PLURALITY OF TERMINALS

(30) Priorité: 11.09.2012 FR 1258514
(43) Date de publication de la demande: 22.07.2015
(73) Titulaire: ORANGE, 92130 Issy-les-Moulineaux (FR)
(72) Inventeur: AUVRAY, Vincent, F-50460 Tonneville (FR)
(86) Numéro de dépôt international: PCT/FR2013/052032
(87) Numéro de publication internationale: WO 2014/041278

(56) Documents cités:
- EP-A1- 2 391 179
- WO-A2-2007/095546
- WO-A2-2008/011111
- US-A1- 2010 166 170
- None

## Description

### Domaine technique

L'invention se rapporte à un procédé de gestion de l'utilisation d'une passerelle par une pluralité de terminaux.

Le terminal en question inclut des ressources physiques et logicielles dont un processeur.

La passerelle en question est un terminal ayant une fonction d'interface entre un réseau local d'un utilisateur et un réseau d'accès d'un opérateur. Une telle passerelle est destinée à l'échange d'un flux de données entre un terminal client connecté au réseau local de transmission de données et le réseau d'accès externe de transmission de données.

La passerelle en question est une ressource physique et logicielle, ou purement logicielle. Lorsqu'elle est purement logicielle, le programme en question est stocké sur un dispositif de traitement de données équipé d'un processeur apte à exécuter le programme. Le dispositif en question est par exemple un téléphone, un ordinateur fixe ou mobile, etc.

### Etat de la technique

Aujourd'hui, de nouveaux terminaux mobiles intègrent un programme assurant une fonction de passerelle. Ces terminaux mobiles offrent la possibilité de transporter à souhait la passerelle et de l'utiliser en tous lieux par différents terminaux. Ceci est décrit par exemple dans la demande de brevet européen EP 2 391 179 A1 et dans la demande internationale WO 2008/011111 A2. Les dispositifs visés sont notamment des téléphones mobiles de type ordiphone (traduction française du terme anglais smartphone). De cette manière, l'ordiphone (sous-entendu la passerelle) interconnecte le terminal et le réseau d'accès.

La passerelle en question limite souvent le nombre maximum de terminaux clients qui lui sont connectés simultanément, ce de façon à assurer une qualité de service minimale. Certaines passerelles offrent par exemple 5 (cinq) connexions simultanées maximales.

Cependant, la passerelle en question, contrairement à des passerelles domestiques traditionnelles, est vouée à se déplacer. En conséquence, la bande passante disponible fluctue dans le temps en fonction du lieu dans lequel se trouve la passerelle. Il arrive que la bande passante courante disponible ne soit suffisante pour assurer une qualité de service suffisante à l'ensemble des terminaux connectés à la passerelle à un instant donné.

Aussi, la passerelle en question peut être alimentée par le biais d'une batterie. Son autonomie varie donc dans le temps. Un niveau trop faible de la batterie peut avoir des conséquences néfastes sur la qualité de service notamment lorsque le nombre de connexions simultanées est trop élevé.

D'une manière générale, les inventeurs ont constaté que la passerelle comprend des ressources physiques et logicielles contribuant à la communication des données entre un terminal et le réseau, et que la fluctuation de l'état de tout ou partie de telles ressources influent sur la qualité du service rendu via la passerelle.

L'invention offre une solution ne présentant pas les inconvénients de l'état de la technique.

### L'invention

A cet effet, selon un aspect fonctionnel, l'invention a pour objet un procédé de gestion tel que défini dans la revendication 1.

Le nombre de connexions simultanées maximales n'est pas fixe comme dans l'art antérieur mais peut varier dans le temps. Une qualité de service peut donc être assurée en modifiant s'il le faut le nombre maximal de connexions simultanées.

Selon un premier mode de mise en œuvre particulier de l'invention, le nombre varie dans le temps en fonction de l'état de tout ou partie des ressources physiques et/ou logicielles du système informatique (décrit ci-après) contribuant à la communication des données entre un terminal et le réseau. Ainsi, selon l'invention, le nombre d'accès au réseau via la passerelle est choisi en fonction par exemple de la bande passante, de la qualité de réception radio, de la latence du réseau mobile et plus généralement de l'état des ressources de la passerelle, ou du réseau, ayant un impact sur la qualité de l'interconnexion et donc de la qualité de service au niveau du terminal.

Selon une variante de ce mode une ressource physique et/ou logicielle est une ressource incluse dans la passerelle, la ressource étant incluse dans la liste suivante : un processeur, une batterie, une mémoire de stockage.

Selon une autre variante de ce mode, qui pourra être mis en œuvre alternativement ou cumulativement avec la précédente variante, la ressource est une bande passante du réseau.

Selon un second mode de mise en œuvre particulier de l'invention, qui pourra être mis en œuvre alternativement ou cumulativement avec le précédent, le nombre varie en fonction de l'instant d'utilisation de la passerelle.

Selon une variante relative au premier et/ou second mode, au moins une connexion en cours est coupée si au moins une ressource physique et/ou logicielle est défaillante. Une défaillance a lieu par exemple, lorsqu'une valeur caractéristique d'une ressource est sous un seuil prédéfini. Par exemple, si la ressource est un réseau, la valeur caractéristique est la bande passante disponible sur le réseau.

Selon une variante relative au premier et/ou second mode, au moins un terminal est prioritaire par rapport à d'autres terminaux ; dans cette configuration, la coupure concerne lesdits autres terminaux. Ainsi, le propriétaire de la passerelle et propriétaire d'un terminal dit prioritaire, partageant la passerelle avec d'autres utilisateurs de terminaux, est assurer qu'il pourra communiquer avec son terminal via la passerelle prioritairement.

Selon un aspect matériel, l'invention a trait à un programme informatique comportant des instructions pour la mise en œuvre du procédé selon l'une des revendications précédentes, lorsque ce programme est exécuté par un processeur. Un tel programme peut utiliser n'importe quel langage de programmation. Il peut être téléchargé depuis un réseau de communication et/ou enregistré sur un support lisible par ordinateur.

Selon un autre aspect matériel, l'invention a trait à un terminal tel que défini dans la revendication 8.

Selon un autre aspect matériel, l'invention a trait à une passerelle telle que définie dans la revendication 9.

L'invention sera mieux comprise à la lecture de la description qui suit, donnée à titre d'exemple et faite en référence aux dessins annexés.

### Les figures:

La figure 1 représente un système informatique à la base duquel seront illustrés deux modes de réalisation de l'invention.
Les figures 2a et 2b représentent schématiquement les circuits inclus dans un terminal et dans un ordiphone, respectivement.
La figure 3 est un organigramme illustrant un premier mode de réalisation du procédé de l'invention.
Les figures 4 et 5 illustrent quelques échanges de données à des fins d'illustration du mode de réalisation de l'invention.

### Description détaillée d'un exemple de réalisation illustrant l'invention

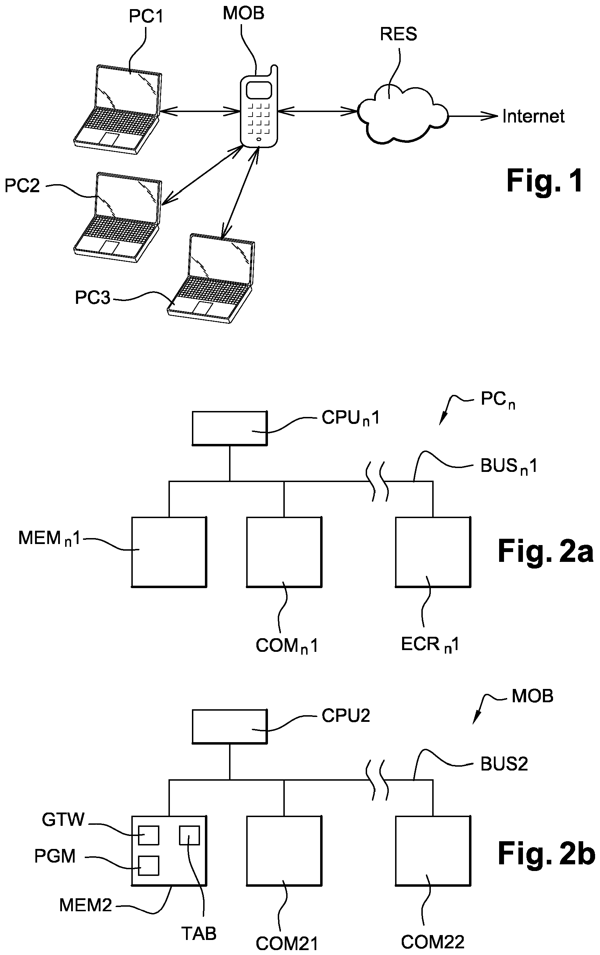

La figure 1 représente un système SYS comprenant des terminaux clients PCn illustrés par des ordinateurs portables à savoir un premier ordinateur PC1, un deuxième ordinateur PC2, un troisième ordinateur PC3.

Les terminaux clients sont équipés de ressources physiques et logicielles. En l'espèce, en référence à la figure 2, les terminaux clients PCn (n=1,2,3, etc.) incluent respectivement
- un processeur CPUn1,
- un module de stockage MEMn1,
- un module de restitution ECRn1 illustrés par un écran,
- un module de communication COMn1 pour établir une connexion avec l'extérieur.

Dans notre exemple, le module de communication inclut un programme client, permettent d'établir une connexion le terminal, dit terminal client, et une passerelle GTW de type logicielle stockée sur un dispositif de traitement de données. Le dispositif en question est par exemple un téléphone, un ordinateur fixe ou mobile, etc. Dans notre exemple, le dispositif de traitement de données MOB est un ordiphone.

L'ordiphone MOB inclut :
- un processeur CPU2, dit deuxième processeur,
- un module de stockage MEM2, dit deuxième module de stockage, dans lequel est stocké le programme GTW ayant la fonction de passerelle ci-après désigné par le terme « passerelle »,
- un module de communication COM21, dit deuxième module de communication d'un premier type, pour établir une connexion avec l'ordiphone MOB,
- un module de communication COM22, dit deuxième module de communication d'un deuxième type, pour établir une connexion avec un réseau d'accès illustré par un réseau 3G.

Dans les terminaux clients PCn et dans l'ordiphone MOB, les modules sont reliés au processeur par l'intermédiaire d'un premier bus BUSn1 et d'un deuxième bus BUS2, respectivement. Rappelons qu'un bus a pour fonction d'assurer le transfert de données numériques entre les différents circuits d'un terminal client. Dans notre exemple, le bus en question inclut un bus de données et un bus de contrôle.

A noter aussi que, dans notre exemple, les modules de stockage décrits ci-dessus sont des mémoires permanentes, par exemple de type ROM (acronyme anglo-saxon de Read Only Memory) et que le terminal client et l'ordiphone incluent également une mémoire vive respective (non représentée) servant à stocker de manière non durable des données de calcul utilisées notamment lors de la mise en œuvre du procédé.

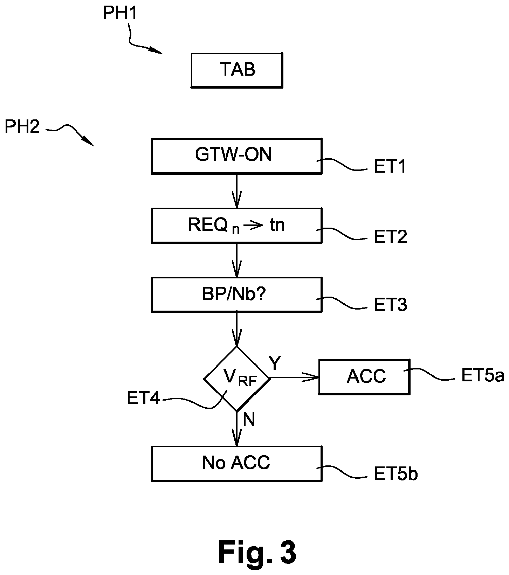

Un premier mode de réalisation va être décrit en référence à la figure 3.

On fait ici l'hypothèse que le réseau d'accès est un réseau 3G et que la passerelle assure une interconnexion entre un réseau WIFI et un réseau RES de type 3G. Cependant, l'invention ne se limite pas à ces deux réseaux mais peut s'étendre à d'autres réseaux de communication (2G (contraction de « deuxième génération », Bluetooth, LTE, Wi-Max, etc.).

Dans ce mode, une première phase PH1 consiste à définir des valeurs, par exemple dans un tableau TAB stocké dans la deuxième mémoire MEM2, indiquant le nombre de connexions simultanées en fonction d'un score relatif à la qualité, ci-après désigné par l'expression « score de qualité ». Ce score est le résultat d'un calcul qui est fonction de l'état des ressources physiques et/ou logicielles, à un instant donné, de la passerelle contribuant à la communication des données entre un terminal et le réseau, à savoir la bande passante, et/ou l'état de la batterie, et/ou l'état de la mémoire volatile de la passerelle, etc.

Le score de qualité en question est, dans notre exemple, exprimé en pourcentage. Dans cet exemple, plus le pourcentage est élevé plus la qualité de service est élevée.

A noter que le mode de calcul d'obtention du score est quelconque. Dans notre exemple :
- Si toutes les ressources visées ci-dessus sont au-delà d'un seuil prédéfini, le score de qualité de service est de 100%. Dans cette configuration, cinq connexions simultanées sont autorisées.
- Si la valeur caractéristique d'une des ressources (par exemple la bande passante sur le réseau RES) est en-dessous d'un seuil, le score de qualité de service est de 80%. Dans cette configuration, quatre connexions simultanées sont autorisées ;
- Si la valeur caractéristique de deux ressources (par exemple la bande passante et la batterie) est en-dessous d'un seuil respectif, le score de qualité de service est de 60%. Dans cette configuration, trois connexions simultanées sont autorisées ;
- ainsi de suite, un score de qualité de service est estimé en fonction de valeurs de paramètres liés aux ressources visées ci-dessus.

Le tableau TAB suivant résume ce mode de calcul du score

| Qualité de service | Nombre maximum de connexions simultanées |
|---|---|
| 100% | 5 |
| 80% | 4 |
| 60% | 3 |
| 40% | 2 |
| 20% | 1 |

Afin de simplifier l'exposé, une seule ressource va être utilisée pour illustrer l'invention. La ressource en question est la bande passante courante disponible sur le réseau 3G. Dans cet exemple simplifié,
- le score relatif à la qualité de service est de 100% si la bande passante sur le réseau 3G d'Orange est supérieure à 3.2 Mbits/s ; rappelons que dans ce cas cinq connexions simultanées sont autorisées.
- le score est de 80% si la bande passante sur le réseau 3G d'Orange est située entre 2.6 Mbits/s et 3.2 Mbits/s ; dans ce cas, seules quatre connexions simultanées sont autorisées.
- le score est de 60% si la bande passante sur le réseau 3G d'Orange située entre 2.1 Mbits/s et 2.6 Mbits/s ; dans ce cas, seules trois connexions simultanées sont autorisées.
- le score est de 40% si la bande passante sur le réseau 3G d'Orange située entre 1.6 Mbits/s et 2.1 Mbits/s), dans ce cas, seules deux connexions simultanées sont autorisées.
- le score est de 20% si la bande passante sur le réseau 3G d'Orange située entre 1.1 Mbits/s et 1.6 Mbits/s ; dans ce cas, seule une connexion est autorisée.

Le tableau suivant résumé cet exemple

| Bande Passante (Mbits/s) | Nombre maximum de connexions simultanées |
|---|---|
| 3.2 | 5 |
| 2.6 | 4 |
| 2.1 | 3 |
| 1.6 | 2 |
| 1.1 | 1 |

A noter que les plages de bandes passantes utilisées ici sont quelconques ; d'autre plages avec d'autres valeurs de bande passante auraient pu être utilisées.

Une deuxième phase PH2 a trait à la gestion de l'accès à la passerelle selon un premier mode de réalisation de l'invention.

Lors de cette deuxième phase PH2, un programme PGM est exécuté ; il en résulte un algorithme illustré à la figure 3.

Dans cet algorithme, lors d'une première étape ET1 (GTW-ON), la passerelle est mise sous tension.

Lors d'une deuxième étape ET2 (REQn->tn), des demandes d'accès REQ issues des terminaux clients sont reçues par la passerelle au fil du temps à des instants tn.

Dans notre exemple, lors d'une troisième étape ET3 (BP/Nb?), le programme récupère le score de qualité décrit ci-dessus en fonction, dans notre exemple, de la valeur de la bande passante BP. Le programme récupère aussi le nombre Nb d'accès simultanés courant.

Une fois ces paramètres récupérés, lors d'une quatrième étape ET4 (VRF), le programme PGM connaissant le nombre de connexions simultanées courant, vérifie le tableau TAB défini lors de la première phase PH1 et donne l'accès ou refuse l'accès au terminal client si le score de qualité de service (caractérisé par la bande passante, la qualité de réception, etc.) est suffisant ou insuffisant, respectivement, pour l'ensemble des terminaux clients, i.e. à la fois
- les terminaux clients ayant une connexion effective en cours
- et le terminal client à l'origine de la demande de connexion.

Pour cela, le programme consulte le tableau TAB.

Si la bande passante est suffisante, l'accès est autorisé à la cinquième étape ET5 (ACC) ; dans la négative, l'accès est refusé à la cinquième étape ET5b (NoACC).

Le programme émet éventuellement un message au terminal client concerné pour informer ce dernier que la connexion est autorisée ou refusée.

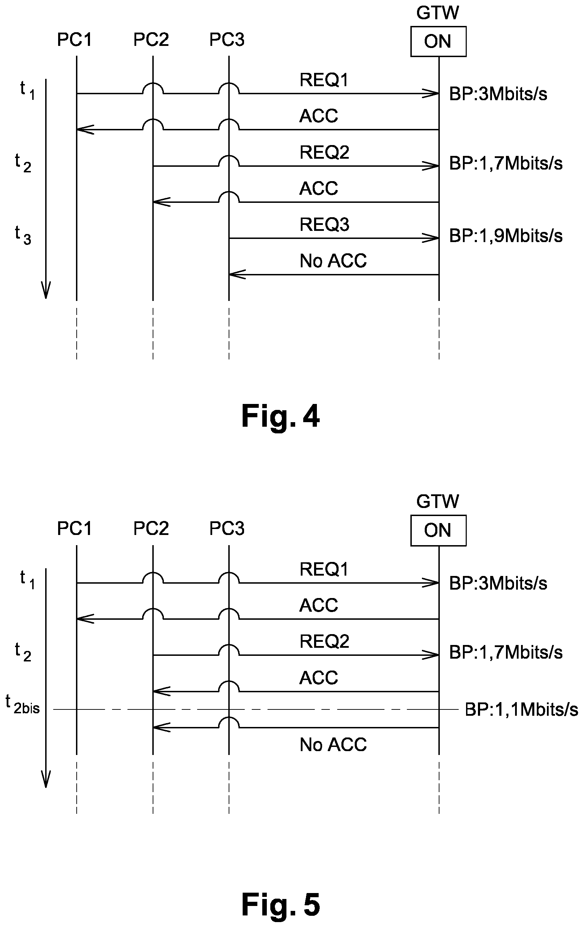

Ce premier mode de réalisation est illustré sur les figures 4 et 5. Ces figures montrent des échanges de données entre les différents terminaux clients et la passerelle. Un axe temporel « t » permet de situer dans le temps un échange donné.

Les terminaux PC1, PC2, PC3 décrits ci-dessus vont initier des requêtes RQ1, REQ2 et REQ3, respectivement, de demande d'accès au réseau d'accès RES via la passerelle GTW.

Lors de la deuxième étape ET2 (REQ1->t1) décrite ci-dessus, la passerelle GTW reçoit une première demande d'accès REQ1 issue du premier ordinateur PC1 à un instant t1. Dans cette configuration, à la troisième étape ET3 (BP/Nb ?), le programme récupère la bande passante courante ; considérons que la bande passante est de 3 Mbits/s. A ce stade, il n'y a aucune connexion en cours. Après consultation de la table TAB, le programme en déduit que la bande passante est donc suffisante. Le programme PGM autorise donc l'accès au réseau au premier terminal via la passerelle lors de la cinquième étape ET5a (ACC).

Lors d'une nouvelle deuxième étape ET2 (REQ2->t2), la passerelle reçoit ensuite une deuxième demande d'accès REQ2 issue du deuxième terminal client PC2 à un instant t2. Dans cette configuration, à la troisième étape ET3 (BP/Nb ?), le programme récupère la bande passante courante ; considérons que la bande passante est de 1.7Mbits/s. A ce stade, une connexion est en cours. La bande passante est donc suffisante pour deux terminaux clients. Le programme PGM autorise donc l'accès au réseau au deuxième terminal client PC2EC via la passerelle lors de la cinquième étape ET5a (ACC).

Lors d'une nouvelle deuxième étape ET2 (REQ3->t3) La passerelle reçoit ensuite une troisième demande d'accès REQ3 issue du troisième terminal client PC3 à un instant t3. Dans cette configuration, à la troisième étape ET3 (BP/Nb ?), le programme récupère la bande passante courante ; considérons que la bande passante est de 1.9 Mbits/s. A ce stade, deux connexions sont en cours. La bande passante n'est donc pas suffisante pour trois accès simultanés. Le programme PGM refuse donc l'accès au réseau au troisième terminal client PC3 lors de la cinquième étape ET5b (No ACC).

Une première variante de ce premier mode est décrite en référence à la figure 5. Selon cette variante, l'obtention de la bande passante, et plus généralement du score de qualité de service courante s'effectue à des instants indépendants des instants de réception de requêtes de demandes d'accès.

Considérons par exemple qu'à l'instant t2bis, situé entre l'instant t2 et t3, la bande passante diminue de telle sorte qu'elle n'est plus suffisante pour assurer deux connexions simultanées ; par exemple la bande passante passe de 1.7 Mbits/s à 1.1 Mbits/s à l'instant t2bis. Dans cette configuration, le programme peut couper l'accès à au moins un terminal client connecté..

La gestion de la coupure de l'accès peut être quelconque. Par exemple, la connexion à couper peut être choisie de façon aléatoire. La connexion à couper peut aussi être gérée selon le principe connu du « premier arrivé/premier sorti » ou « dernier arrivé/premier sortie ».

D'autres règles de coupure peuvent être prévues. Par exemple, le programme notifie aux terminaux clients que la bande passante n'est pas suffisante. De cette façon, un terminal client connecté peut décider de couper la connexion spontanément libérant ainsi une connexion à la passerelle.

Selon une deuxième variante de ce premier mode, une partie de la bande passante est allouée au propriétaire de la passerelle afin que ce dernier soit prioritaire par rapport aux autres terminaux clients. Ainsi, si une coupure doit être effectuée, celle-ci concernera, de préférence, un terminal client autre que le terminal client prioritaire.

Considérons le premier terminal client PC1 est prioritaire par rapport aux autres terminaux clients vis-à-vis de la passerelle, par exemple parce que l'utilisateur de ce premier terminal client est également propriétaire de la passerelle. Deux cas de figures se présentent alors :
- Soit une bande passante est allouée en permanence au premier terminal client PC1 ; dans ce cas, le nombre de connexions simultanées inclura le premier terminal client PC1 même si ce dernier n'est pas connecté à la passerelle.
- Soit la bande passante est allouée au premier terminal client PC1 à la volée, c'est-à-dire suite à la réception d'une demande de connexion issue du premier terminal client PC1 ; dans ce cas, lorsque le premier terminal client requiert une connexion avec la passerelle, si la bande passante n'est pas suffisante, le programme coupe l'accès à au moins un terminal client en cours de connexion avec la passerelle afin de libérer une bande passante suffisante pour que le premier terminal client EC puisse communiquer via la passerelle.

Un deuxième mode de réalisation va maintenant être décrit. Ce deuxième mode peut être mis en œuvre isolément ou en combinaison avec le premier mode de réalisation.

Dans ce second mode, le nombre de connexions maximal est fonction de l'instant d'utilisation de la passerelle. Par exemple, lorsque la passerelle est situé sur le lieu de travail de l'utilisateur de l'ordiphone, cinq connexions sont autorisées par exemple par ce que le lieu de travail est situé dans une grande agglomération dans laquelle la couverture réseau est optimale. Au contraire, lorsque la passerelle est située dans le domicile, trois connexions sont autorisées par exemple par ce que le domicile en question est situé en campagne avec peu de couverture réseau.

La modification du nombre maximal peut être réalisé soit manuellement, soit automatiquement par le bais d'un programme de géolocalisation apte à localiser géographiquement la passerelle et d'un programme apte à modifier le nombre en fonction de la localisation en conséquence. Le paramétrage est réalisé au préalable par exemple par l'utilisateur, ou par l'opérateur de télécommunication, ou tout autres tiers ayant un droit de paramétrage. Par exemple, l'opérateur pour optimiser son réseau, maximiser ses profits, etc., pourra à distance influer sur le nombre de connexions maximales, la durée de ces connexions et tout autre paramètre lié au service.

## Revendications

1. procédé de gestion de l'utilisation d'une passerelle apte à interconnecter des réseaux, ladite passerelle (GTW) étant apte à recevoir des demandes d'accès à un réseau depuis des terminaux (PC1,PC2,PC3), un nombre maximum d'accès simultanés étant défini de manière à assurer une qualité de service donnée, ledit procédé comprenant
- une étape de détermination, par la passerelle, d'un état de tout ou partie des ressources physiques et/ou logicielles contribuant à la communication des données entre un terminal et le réseau
- une étape de modification au cours de laquelle le nombre maximum d'accès simultanés au réseau via la passerelle varie dans le temps en fonction de l'état déterminé, les nombres maximums d'accès simultanés disponibles étant supérieurs strictement à un,
- une étape de réception d'une demande d'accès depuis un terminal;
- une étape d'autorisation ou de refus de la demande d'accès du terminal en fonction du nombre maximum d'accès simultanés courant.

2. Procédé selon la revendication 1, **caractérisé en ce qu'**une ressource physique et/ou logicielle est une ressource inclut dans la passerelle, la ressource étant inclut dans la liste suivante : un processeur, une batterie, une mémoire de stockage.

3. Procédé selon la revendication 1, **caractérisé en ce qu'**une ressource est une bande passante du réseau.

4. Procédé selon la revendication 1, **caractérisé en ce que** le nombre varie en fonction de l'instant d'utilisation de la passerelle.

5. Procédé selon la revendication 1, **caractérisé en ce qu'**au moins une connexion en cours est coupée si au moins une ressource physique et/ou logicielle est défaillante.

6. Procédé selon la revendication 5, **caractérisé en ce qu'**au moins un terminal est prioritaire par rapport à d'autres terminaux, et **en ce que** la coupure concerne lesdits autres terminaux.

7. Programme informatique comportant des instructions pour la mise en œuvre de toutes les étapes du procédé selon l'une des revendications précédentes, lorsque ce programme est exécuté par un processeur.

8. Terminal (MOB) comprenant une passerelle (GTW) apte à interconnecter des réseaux, ladite passerelle étant apte à recevoir des demandes d'accès à un réseau depuis des terminaux, un nombre maximum d'accès simultanés étant défini de manière à assurer une qualité de service donnée, ledit terminal comprenant
a. un module de détermination, par la passerelle, d'un état de tout ou partie des ressources physiques et/ou logicielles contribuant à la communication des données entre un terminal et le réseau
b. un module de modification du nombre maximum apte à faire varier dans le temps le nombre maximum d'accès simultanés au réseau via la passerelle en fonction de l'état déterminé, les nombres maximums d'accès simultanés disponibles étant supérieurs strictement à un ;
c. un module de réception d'une demande d'accès depuis un terminal;
d. un module d'autorisation ou de refus de la demande d'accès du terminal en fonction du nombre maximum d'accès simultanés courant.

9. Passerelle (GTW) apte à interconnecter des réseaux, ladite passerelle étant apte à recevoir des demandes d'accès à un réseau depuis des terminaux, un nombre maximum d'accès simultanés maximums étant défini de manière à assurer une qualité de service donnée, ladite passerelle comprenant
a. un module de détermination d'un état de tout ou partie des ressources physiques et/ou logicielles contribuant à la communication des données entre un terminal et le réseau
b. un module de modification du nombre maximum apte à faire varier dans le temps le nombre maximum d'accès simultanés au réseau via la passerelle en fonction de l'état déterminé les nombres maximums d'accès simultanés disponibles étant supérieurs strictement à un ;
c. un module de réception d'une demande d'accès depuis un terminal;
d. un module d'autorisation ou de refus de la demande d'accès du terminal en fonction du nombre maximum d'accès simultanés courant.

## Patentansprüche

1. Verfahren zur Verwaltung der Nutzung eines Gateways, das dazu geeignet ist, Netze miteinander zu verbinden, wobei das Gateway (GTW) dazu geeignet ist, Netzzugangsanforderungen von Endgeräten (PC1, PC2, PC3) zu empfangen, wobei eine maximale Anzahl gleichzeitiger Zugänge definiert ist, um eine gegebene Dienstqualität zu gewährleisten, wobei das Verfahren umfasst:
- einen Schritt der Bestimmung eines Zustands aller oder eines Teils der physischen und/oder Software-Ressourcen, die zur Kommunikation der Daten zwischen einem Endgerät und dem Netz beitragen, durch das Gateway
- einen Schritt der Änderung, in dessen Verlauf die maximale Anzahl gleichzeitiger Zugänge zum Netz über das Gateway im Zeitverlauf abhängig vom bestimmten Zustand variiert, wobei die maximalen Anzahlen verfügbarer gleichzeitiger Zugänge streng größer als eins sind,
- einen Schritt des Empfangs einer Zugangsanforderung von einem Endgerät;
- einen Schritt der Autorisierung oder der Ablehnung der Zugangsanforderung des Endgerätes abhängig von der aktuellen maximalen Anzahl gleichzeitiger Zugänge.

2. Verfahren nach Anspruch 1, **dadurch gekennzeichnet, dass** eine physische und/oder Software-Ressource eine im Gateway enthaltene Ressource ist, wobei die Ressource in der folgenden Liste enthalten ist: ein Prozessor, eine Batterie, ein Speicher.

3. Verfahren nach Anspruch 1, **dadurch gekennzeichnet, dass** eine Ressource eine Bandbreite des Netzes ist.

4. Verfahren nach Anspruch 1, **dadurch gekennzeichnet, dass** die Anzahl abhängig vom Zeitpunkt der Nutzung des Gateways abhängt.

5. Verfahren nach Anspruch 1, **dadurch gekennzeichnet, dass** mindestens eine laufende Verbindung getrennt wird, wenn mindestens eine physische und/oder Software-Ressource fehlerhaft ist.

6. Verfahren nach Anspruch 5, **dadurch gekennzeichnet, dass** mindestens ein Endgerät prioritär gegenüber anderen Endgeräten ist, und dadurch, dass die Trennung die anderen Endgeräte betrifft.

7. Computerprogramm, umfassend Anweisungen für die Umsetzung aller Schritte des Verfahrens nach einem der vorhergehenden Ansprüche, wenn das Programm durch einen Prozessor ausgeführt wird.

8. Endgerät (MOB), umfassend ein Gateway (GTW), das dazu geeignet ist, Netze miteinander zu verbinden, wobei das Gateway dazu geeignet ist, Netzzugangsanforderungen von Endgeräten zu empfangen, wobei eine maximale Anzahl gleichzeitiger Zugänge definiert ist, um eine gegebene Dienstqualität zu gewährleisten, wobei das Endgerät umfasst:
a. ein Modul zur Bestimmung eines Zustands aller oder eines Teils der physischen und/oder Software-Ressourcen, die zur Kommunikation der Daten zwischen einem Endgerät und dem Netz beitragen, durch das Gateway
b. ein Modul zur Änderung der maximalen Anzahl, das dazu geeignet ist, die Anzahl gleichzeitiger Zugänge zum Netz über das Gateway im Zeitverlauf abhängig vom bestimmten Zustand zu variieren, wobei die maximalen Anzahlen verfügbarer gleichzeitiger Zugriffe streng größer als eins sind,
c. ein Modul zum Empfang einer Zugangsanforderung von einem Endgerät;
d. ein Modul zur Autorisierung oder Ablehnung der Zugangsanforderung des Endgerätes abhängig von der aktuellen maximalen Anzahl gleichzeitiger Zugänge.

9. Gateway (GTW), das dazu geeignet ist, Netze miteinander zu verbinden, wobei das Gateway dazu geeignet ist, Netzzugangsanforderungen von Endgeräten zu empfangen, wobei eine maximale Anzahl gleichzeitiger Zugänge definiert ist, um eine gegebene Dienstqualität zu gewährleisten, wobei das Gateway umfasst:
a. ein Modul zur Bestimmung eines Zustands aller oder eines Teils der physischen und/oder Software-Ressourcen, die zur Kommunikation der Daten zwischen einem Endgerät und dem Netz beitragen
b. ein Modul zur Änderung der maximalen Anzahl, das dazu geeignet ist, die Anzahl gleichzeitiger Zugänge zum Netz über das Gateway im Zeitverlauf abhängig vom bestimmten Zustand zu variieren, wobei die maximalen Anzahlen verfügbarer gleichzeitiger Zugriffe streng größer als eins sind,
c. ein Modul zum Empfang einer Zugangsanforderung von einem Endgerät;
d. ein Modul zur Autorisierung oder Ablehnung der Zugangsanforderung des Endgerätes abhängig von der aktuellen maximalen Anzahl gleichzeitiger Zugänge.

## Claims

1. Method for managing the use of a gateway able to interconnect networks, said gateway (GTW) being able to receive requests to access a network from terminals (PC1, PC2, PC3), a maximum number of simultaneous accesses being defined so as to ensure a given quality of service, said method comprising
- a step in which the gateway determines a state of all or some of the physical and/or software resources contributing to the communication of data between a terminal and the network
- a modifying step in which the maximum number of simultaneous accesses to the network via the gateway varies over time depending on the determined state, the available maximum numbers of simultaneous accesses being strictly higher than one,
- a step in which an access request is received from a terminal;
- a step in which the access request is authorized or refused depending on the current maximum number of simultaneous accesses.

2. Method according to Claim 1, **characterized in that** a physical and/or software resource is a resource included in the gateway, the resource being included in the following list: a processor, a battery, a storage memory.

3. Method according to Claim 1, **characterized in that** a resource is a bandwidth of the network.

4. Method according to Claim 1, **characterized in that** the number varies as a function of the time of use of the gateway.

5. Method according to Claim 1, **characterized in that** at least one ongoing connection is disconnected if at least one physical and/or software resource fails.

6. Method according to Claim 5, **characterized in that** at least one terminal has priority over other terminals, and **in that** it is said other terminals that are disconnected.

7. Computer program containing instructions for implementing all the steps of a method according to one of the preceding claims, when this program is executed by a processor.

8. Terminal (MOB) comprising a gateway (GTW) able to interconnect networks, said gateway being able to receive requests to access a network from terminals, a maximum number of simultaneous accesses being defined so as to ensure a given quality of service, said terminal comprising
a. a module via which the gateway determines a state of all or some of the physical and/or software resources contributing to the communication of data between a terminal and the network
b. a module for modifying the maximum number, which is able to make vary over time the maximum number of simultaneous accesses to the network via the gateway depending on the determined state, the available maximum numbers of simultaneous accesses being strictly higher than one,
c. a module for receiving an access request from a terminal;
d. a module for receiving an authorization or refusal of the access request depending on the current maximum number of simultaneous accesses.

9. Gateway (GTW) able to interconnect networks, said gateway being able to receive requests to access a network from terminals, a maximum number of simultaneous accesses being defined so as to ensure a given quality of service, said gateway comprising
a. a module for determining a state of all or some of the physical and/or software resources contributing to the communication of data between a terminal and the network
b. a module for modifying maximum number, which is able to make vary over time the maximum number of simultaneous accesses to the network via the gateway depending on the determined state, the available maximum numbers of simultaneous accesses being strictly higher than one,
c. a module for receiving an access request from a terminal;
d. a module for authorizing or refusing the access request of the terminal depending on the current maximum number of simultaneous accesses.
